# EUROPEAN PATENT SPECIFICATION

(11) **EP 3 636 494 B1**
(45) Date of publication and mention of the grant of the patent: **05.08.2020**
(21) Application number: 19201869.5
(22) Date of filing: 08.10.2019
(51) Int. Cl.: B60R 9/052

(54) **CROSS BAR**
QUERSTANGE
BARRE TRANSVERSALE

(30) Priority: 09.10.2018 IT 201800009273
(43) Date of publication of application: 15.04.2020
(73) Proprietor: Lampa S.p.A., 46019 Viadana (MN) (IT)
(72) Inventor: MARUTTI, Paolo, 46019 VIADANA (MANTOVA) (IT)
(74) Representative: Monelli, Alberto

(56) References cited:
- EP-A1- 0 504 588
- WO-A1-2009/038481
- WO-A1-2018/114072
- DE-A1-102012 213 256
- Xxxx Xxxx: "Rhino 2500 Series - Two Bar Aero System", , 15 March 2010 (2010-03-15), XP055577206, Retrieved from the Internet: URL:http://www.rhinorack.fr/rhinoweb/rhino data/instructions/completeroofracks/2500/2 500aero/da127.pdf [retrieved on 2019-04-03]
- Xxxx Xxxx: "Replacement Endcap for Rhino-Rack Vortex Aero Crossbars - Non-Locking", , 1 January 2018 (2018-01-01), XP055577215, Retrieved from the Internet: URL:https://www.etrailer.com/Accessories-a nd-Parts/Rhino-Rack/RRM645.html [retrieved on 2019-04-03]

## Description

The present invention relates to a cross bar that can be applied to the roof of a vehicle to support an accessory. This accessory might for example be a bicycle carrier, a roof rack, etc.

This vehicle is typically a motor car.

Patent document EP 0 504 588 A1 discloses a cross bar according to the preamble of claim 1.

Support bars are known that are applicable on the roof of a passenger compartment of a motor car. They comprise a groove into which an accessory can be inserted. The groove has an overturned T-section, i.e. narrow at the top so as to prevent extraction of the accessory from above. The insertion and extraction of the accessory takes place laterally, from one end of the bar. A plug is located at this end. It is hinged at a front portion. A rear portion can then be raised or lowered so as to uncover an access opening to the groove from which said accessory can be extracted or inserted.

A slight interference causes that the plug normally occludes the access opening. In any case should the plug rotate slightly about the hinge thereof located in the front portion, the air flow that strikes it during the advancement of the vehicle repositions it in the desired position (so that it obstructs the access opening).

In this context, the technical task underpinning the present invention is to provide a cross bar which minimises the risk of accidental opening of an end closing plug.

The stated technical task and specified objects are substantially attained by a cross bar comprising the technical features set forth in one or more of the appended claims.

Further characteristics and advantages of the present invention will become more apparent from the following indicative, and hence nonlimiting, description of a preferred, but not exclusive, embodiment of a cross bar as illustrated in the appended drawings, in which:

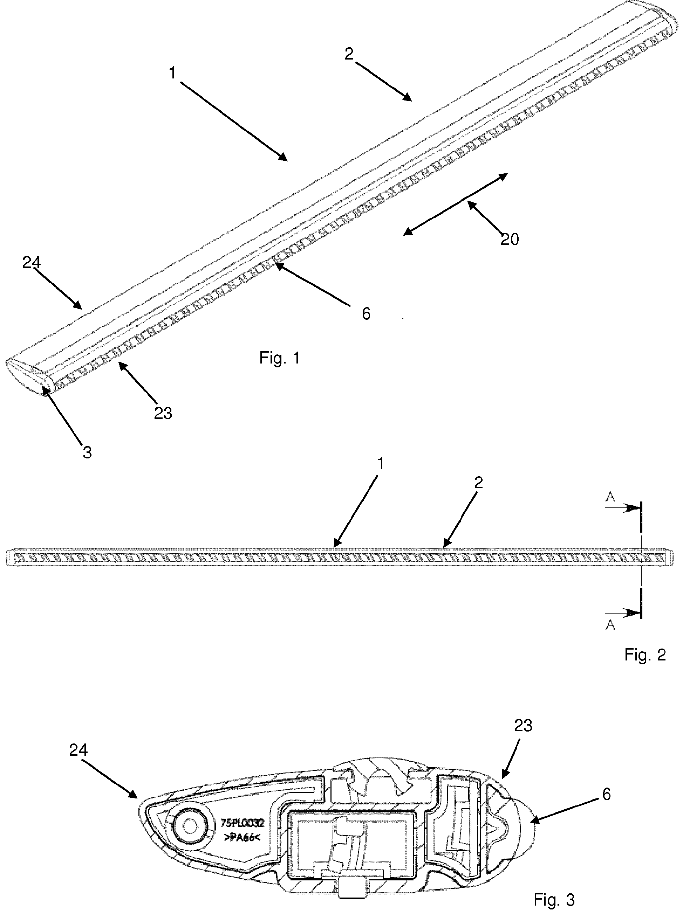

- figure 1 shows a perspective view of a cross bar according to the present invention;
- figure 2 is a plan view of the bar of figure 1;
- figure 3 shows a sectional view according to the plane A-A of figure 2;
- figure 4 is an exploded view of a detail of the bar of figures 1-3;
- figures 5 and 6 show two different configurations of a detail of the bar of figures 1-4;
- figures 7 and 8 show two different configurations of a detail of the bar of figures 1-6;
- figures 9 and 10 show, in two different configurations, an alternative solution to that of figures 5 and 6;
- figures 11 and 12 show, in two different configurations, an alternative solution to that of the preceding figures;
- figures 13 and 14 show, in two different configurations, an alternative solution to that of the preceding figures.

In the appended figures, reference number 1 denotes a cross bar applicable on a roof of a vehicle to support an accessory. This accessory is typically an element that is extraneous of the bar.

As indicated in the foregoing, this accessory might for example be a bicycle carrier, a roof rack, etc.

This vehicle is typically a motor car.

The bar 1 is transversal (or preferably perpendicular) with respect to an advancement direction of the vehicle.

The bar 1 comprises a profile section 2 which predominantly extends along a first direction 20. This first direction 20 is transversal to the advancement direction of the vehicle. The profile section 2 comprises a first groove 21 for the insertion of a portion of an accessory. The first groove 21 involves an upper portion of the profile section 2.

The first groove 21 has a passage section that preferably comprises an upper portion that is open and narrower with respect to a lower portion (in the preferred solution this is an overturned T shape). In this way a foot of the accessory is insertable in the first groove and cannot be extracted through the open upper portion. As will be more fully described in the following, the foot can be introduced and extracted laterally.

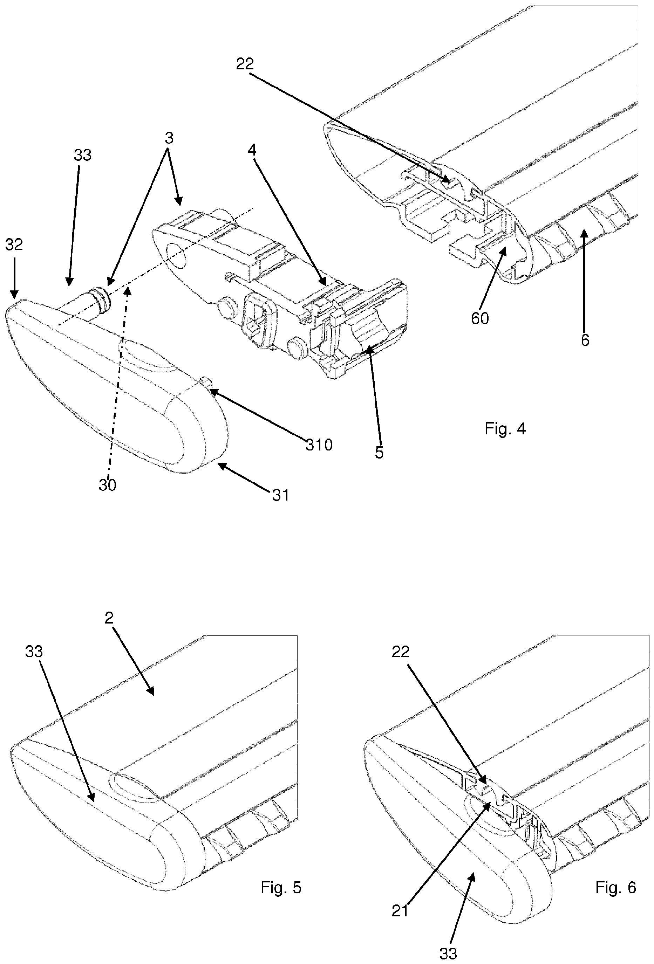

The bar 1 comprises a terminal 3 applied to at least one end of the profile section 2. The terminal 3 comprises a movable portion 33 that is movable between a first and a second configuration. In the first configuration the movable portion 33 of the terminal 3 obstructs a side access opening 22 to the first groove 21 (see for example figure 5). This terminal 3 can alternatively be defined a "plug" 3. It in fact closes an end of the profile section 2.

In the second configuration, the movable portion 33 of the terminal 3 allows access to said opening 22 to allow the insertion or extraction of an accessory in/from the first groove 21 (see for example figure 6).

The bar 1 comprises locking means 4 of said movable portion 33 of the terminal 3 in the first configuration. In this way the risk of accidental openings of the terminal 3 is minimised.

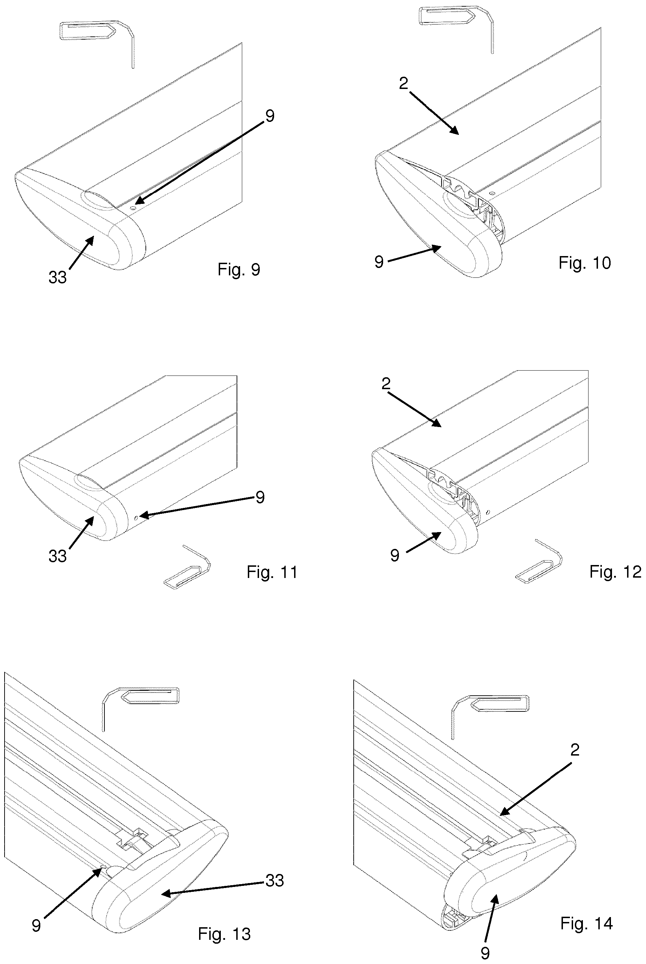

The bar 1 also comprises an unlocking control 5 to unlock said locking means 4. The control 5 is operable by a user. The unlocking control 5 is of a mechanical type. According to the invention it is a button operable by a user (see for example figure 4). According to a further example it might be a lever. The unlocking control (for example a button or a lever) might be accessible via a hole 9 in which an external sharp element can be inserted (see for example three different constructional solutions illustrated in two operative configurations in figures 9 to 13). The hole 9 advantageously has a perimeter of smaller than 8 millimetres. This is to make accidental activation even more difficult.

The profile section 2 is shaped like a profile with a front nose 23 and a rear tail 24. In particular the profile section is an airfoil. The expression airfoil is intended to mean a profile having a front portion, and preferably also a rear portion, which are rounded. This is to optimise the aerodynamics. Further, in this profile section an upper portion and a lower portion which connect the front nose 23 and the rear tail 24 can be identified. The first groove 21 is afforded on the upper portion.

The movable portion 33 of the terminal 3, between the first and the second configuration, is rotatable with respect to the profile section 2.

The movable portion 33 of the terminal 3 comprises a front portion 31 and a rear portion 32, which in the first configuration are respectively positioned at the nose 23 and the tail 24 of the profile section.

This movable portion 33 of the terminal 3 in the first configuration is shaped like a prolongation of the profile section 2. In particular it is a prolongation of the profile section 2 along the first direction 20. The movable portion 33 of the terminal 3 along the first direction 20 extends for less than 3 centimetres.

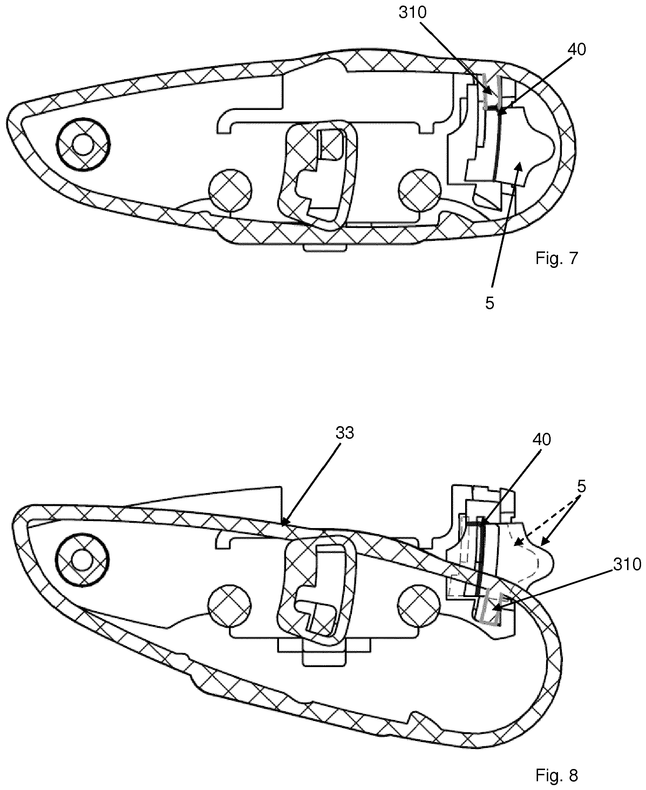

The locking means 4 comprise a support 40 which in the first configuration supports the front portion 31; the actuation of said unlocking control 5 causes the displacement of said support 40 and consequently the displacement of said front portion 31. The displacement of the support 40 advantageously determines a fall by force of gravity of the front portion 31. In particular figure 7 shows in the first configuration the support 40 which supports the front portion 31. In particular it supports a tooth 310 that is a part of the front portion 31.

Figure 8 shows that the support 40, under the action of the unlocking control 5, has moved and allows the front portion 31 to fall (as it no longer supports the above-mentioned tooth 310). In figure 8 the unlocking control 5 is illustrated in a broken line so as to better illustrate the displacement. For a like reason, in figures 7 and 8 the surfaces of the support 40 and the tooth 310 enabling the support or fall of the front portion 31 have been made thicker.

The bar 1 advantageously comprises a windbreak strip 6 placed at the nose 23 of the profile section 2. The strip 6 is at least partly flexible. The unlocking control 5 is hidden by the windbreak strip 6 and placed behind the windbreak strip 6. The flexibility of the windbreak strip 6 allows the user to operate the unlocking control 5.

In this matter the bar 1 comprises a second groove 60 occluded by the windbreak strip 6. In this matter the windbreak strip 6 frontally occludes the second groove 60. The windbreak strip 6 comprises reliefs. The reliefs break up the air flow and minimise annoying aerodynamic whistling. The second groove extends for the most part along the first direction 20. The reliefs preferably, though not necessarily, extend flanked and preferably identical along the first direction 20.

In the preferred solution a rotation of the movable portion 33 of the terminal 3 by a predetermined angle of less than 30° (advantageously less than 20°, preferably less than or equal to 15°) with respect to the first configuration makes it possible to entirely uncover said side access opening 22 at said first groove 21. This is therefore a minimum rotation. The movable portion 33 of the terminal 3, to pass from the first configuration to the second configuration and vice versa, is rotatable with respect to an axis 30 of rotation. The rear portion 32 of the movable portion 33 of the terminal 3 is nearer to the axis 30 of rotation with respect to the front portion 31. The movable portion 33 of the terminal 3 is hinged in proximity of the rear portion 32.

In the preferred embodiment the locking means 4 and said unlocking control 5 are housed in said profile section 2.

Advantageously all the part of the terminal 3 that protrudes out of the profile section 2 is a part of the movable portion 33. The terminal 3 can further comprise a fixed portion with respect to which the movable portion 33 is rotatable. The fixed portion is housed inside the profile section 2.

An additional terminal 3 is advantageously present at an end of the profile section 2 opposite the end with the terminal 3. What is described with reference to the terminal 3 can also relate to the additional terminal. In particular the bar 1 is symmetrical with respect to a perpendicular plane to the first direction 20.

The present invention achieves important advantages.

Primarily this enables minimising the risk of involuntary and undesired openings of the terminal 3. Further, it enables making the opening of the terminal 3 extremely rapid with only minimal displacements of the terminal 3.

The invention as it is conceived is susceptible to numerous modifications and variations, all falling within the scope of the inventive concept characterising it as defined by the appended claims. Furthermore, all the details can be replaced by other technically equivalent elements. In practice, all the materials used, as well as the dimensions, can be any according to requirements.

## Claims

1. A cross bar that can be applied to the roof of a vehicle to support an accessory, comprising:
- a profile section (2) which predominantly extends along a first direction (20) and comprising a first groove (21) for the insertion of a portion of an accessory;
- a terminal (3) applied to at least one end of the profile section (2) and comprising a movable portion (33) that is movable between:
i) a first configuration in which it obstructs a side access opening (22) to said first groove (21); and
ii) a second configuration in which it allows access to said opening (22) to allow the insertion or extraction of an accessory in/from the first groove (21); wherein it further comprises:
- locking means (4) to lock said terminal (3) in the first configuration; and
- an unlocking control (5) to unlock said locking means (4),
**characterized by** said control (5)
being a button operable by a user.

2. The bar according to claim 1, **characterised in that** the movable portion (33) is rotatable with respect to the profile section (2) between the first and the second configuration.

3. The bar according to claim 1 or 2, **characterised in that** said profile section (2) is shaped like a profile with a front nose (23) and a rear tail (24).

4. The bar according to claim 3, **characterised in that** the movable portion (33) of the terminal (3) comprises a front portion (31) and a rear portion (32), which in the first configuration are respectively positioned at the nose (23) and the tail (24) of the profile section (2).

5. The bar according to claim 4, **characterised in that** said locking means (4) comprise a support (40) which in the first configuration supports the front portion (31); the actuation of said unlocking control (5) causes the displacement of said support (40) and consequently the displacement of said front portion (31).

6. The bar according to claim 4 or 5, **characterised in that** the movable portion (33) of the terminal (3), to pass from the first configuration to the second configuration and vice versa, is rotatable with respect to an axis (30) of rotation, said rear portion (32) being closer to said axis (30) of rotation than to said front portion (31).

7. The bar according to any of claims 3 to 6, **characterised in that** it comprises a windbreak strip (6) placed at the nose (23) of the profile section (2), said strip (6) being at least partly flexible, said unlocking control (5) being hidden by the windbreak strip (6) and placed behind the windbreak strip (6); the flexibility of the windbreak strip (6) allows the user to operate said unlocking control (5).

8. The bar according to claim 2 or any of claims 3 to 7 when it depends directly or indirectly from claim 2, **characterised in that** a rotation of said movable portion (33) with a predetermined angle of less than 30° with respect to the first configuration makes it possible to entirely uncover said side access opening (22) at said first groove (21).

9. The bar according to any one of the preceding claims, **characterised in that** said locking means (4) and said unlocking control (5) are housed in said profile section.

10. The bar according to any one of the preceding claims, **characterised in that** the profile section (2) is an airfoil.

## Patentansprüche

1. Querstange, die auf das Dach eines Fahrzeugs angebracht werden kann, um ein Zubehör zu tragen, umfassend:
- ein Profilteilstück (2), das sich überwiegend entlang einer ersten Richtung (20) erstreckt und eine erste Nut (21) zum Einsetzen eines Abschnitts eines Zubehörs umfasst;
- einen Anschluss (3), der an mindestens einem Ende des Profilteilstücks (2) angebracht ist und einen beweglichen Abschnitt (33) umfasst, der beweglich ist zwischen:
i) einer ersten Konfiguration, in der er eine seitliche Zugangsöffnung (22) zu der ersten Nut (21) blockiert; und
ii) einer zweiten Konfiguration, in der er den Zugang zu der Öffnung (22) ermöglicht, um das Einsetzen oder Herausziehen eines Zubehörs in/aus der ersten Nut (21) zu ermöglichen;
wobei sie zudem umfasst:
- Verriegelungsmittel (4) zum Verriegeln des Anschlusses (3) in der ersten Konfiguration; und
- eine Entriegelungssteuerung (5) zum Entriegeln der Verriegelungsmittel (4), **dadurch gekennzeichnet, dass** die Steuerung (5) eine von einem Benutzer bedienbare Schaltfläche ist.

2. Stange nach Anspruch 1, **dadurch gekennzeichnet, dass** der bewegliche Abschnitt (33) in Bezug auf das Profilteilstück (2) zwischen der ersten und der zweiten Konfiguration drehbar ist.

3. Stange nach Anspruch 1 oder 2, **dadurch gekennzeichnet, dass** das Profilteilstück (2) wie ein Profil mit einer vorderen Nase (23) und einem hinteren Heck (24) geformt ist.

4. Stange nach Anspruch 3, **dadurch gekennzeichnet, dass** der bewegliche Abschnitt (33) des Anschlusses (3) einen vorderen Abschnitt (31) und einen hinteren Abschnitt (32) umfasst, die in der ersten Konfiguration jeweils an der Nase (23) und am Heck (24) des Profilteilstücks (2) positioniert sind.

5. Stange nach Anspruch 4, **dadurch gekennzeichnet, dass** die Verriegelungsmittel (4) einen Träger (40) umfassen, der in der ersten Konfiguration den vorderen Abschnitt (31) trägt; die Betätigung der Entriegelungssteuerung (5) bewirkt die Verschiebung des Trägers (40) und folglich die Verschiebung des vorderen Abschnitts (31).

6. Stange nach Anspruch 4 oder 5, **dadurch gekennzeichnet, dass** der bewegliche Abschnitt (33) des Anschlusses (3), um von der ersten Konfiguration in die zweite Konfiguration und umgekehrt zu wechseln, in Bezug auf eine Drehachse (30) drehbar ist, wobei der hintere Abschnitt (32) näher an der Drehachse (30) liegt als an dem vorderen Abschnitt (31).

7. Stange nach einem der Ansprüche 3 bis 6, **dadurch gekennzeichnet, dass** sie einen Windschutzstreifen (6) umfasst, der an der Nase (23) des Profilteilstücks (2) angeordnet ist, wobei der Streifen (6) zumindest teilweise flexibel ist, wobei die Entriegelungssteuerung (5) durch den Windschutzstreifen (6) verborgen und hinter dem Windschutzstreifen (6) platziert ist; die Flexibilität des Windschutzstreifens (6) ermöglicht es dem Benutzer, die Entriegelungssteuerung (5) zu bedienen.

8. Stange nach Anspruch 2 oder einem der Ansprüche 3 bis 7, wenn sie direkt oder indirekt von Anspruch 2 abhängt, **dadurch gekennzeichnet, dass** eine Drehung des beweglichen Abschnitts (33) mit einem vorbestimmten Winkel von weniger als 30° in Bezug auf die erste Konfiguration ermöglicht, die seitliche Zugangsöffnung (22) an der ersten Nut (21) vollständig freizulegen.

9. Stange nach einem der vorhergehenden Ansprüche, **dadurch gekennzeichnet, dass** die Verriegelungsmittel (4) und die Entriegelungssteuerung (5) im Profilteilstück untergebracht sind.

10. Stange nach einem der vorhergehenden Ansprüche, **dadurch gekennzeichnet, dass** das Profilteilstück (2) ein aerodynamisches Profil ist.

## Revendications

1. Barre transversale pouvant être appliquée sur le toit d'un véhicule pour soutenir un accessoire, comprenant :
- une section de profilé (2) se prolongeant principalement le long d'une première direction (20) et comprenant une première rainure (21) servant à l'introduction d'une partie d'un accessoire ;
- une terminaison (3) appliquée à au moins une extrémité de la section de profilé (2) et comprenant une partie mobile (33) étant mobile entre :
i) une première configuration dans laquelle elle obstrue une ouverture d'accès latérale (22) sur ladite première rainure (21) ; et
ii) une deuxième configuration dans laquelle elle permet d'accéder à ladite ouverture (22) pour permettre l'introduction ou l'extraction d'un accessoire dans/de la première rainure (21) ;
dans laquelle elle comprend de plus :
- des moyens de verrouillage (4) servant à verrouiller ladite terminaison (3) dans la première configuration ; et
- une commande de déverrouillage (5) servant à déverrouiller lesdits moyens de verrouillage (4), **caractérisée par** ladite commande (5) étant un bouton actionnable par un utilisateur.

2. Barre selon la revendication 1, **caractérisée en ce que** la partie mobile (33) peut pivoter par rapport à la section de profilé (2) entre la première et la seconde configuration.

3. Barre selon la revendication 1 ou 2, **caractérisée en ce que** ladite section de profilé (2) a la forme d'un profilé à nez avant (23) et queue arrière (24).

4. Barre selon la revendication 3, **caractérisée en ce que** la partie mobile (33) de la terminaison (3) comprend une partie avant (31) et une partie arrière (32) qui, dans la première configuration, sont respectivement positionnées en correspondance du nez (23) et de la queue (24) de la section de profilé (2).

5. Barre selon la revendication 4, **caractérisée en ce que** lesdits moyens de verrouillage (4) comprennent un support (40) qui, dans la première configuration, supporte la partie avant (31) ; l'actionnement de ladite commande de déverrouillage (5) provoque le déplacement dudit support (40) et, par conséquent, le déplacement de ladite partie avant (31).

6. Barre selon la revendication 4 ou 5, **caractérisée en ce que** la partie mobile (33) de la terminaison (3), pour passer de la première configuration à la seconde configuration et vice versa, peut pivoter par rapport à un axe (30) de rotation, ladite partie arrière (32) étant plus proche dudit axe (30) de rotation que de ladite partie avant (31).

7. Barre selon l'une quelconque des revendications 3 à 6, **caractérisée en ce qu'**elle comprend une bande (6) coupe-vent placée en correspondance du nez (23) de la section de profilé (2), ladite bande (6) étant au moins partiellement flexible, ladite commande de déverrouillage (5) étant cachée par la bande (6) coupe-vent et placée derrière la bande (6) coupe-vent ; la flexibilité de la bande (6) coupe-vent permet à l'utilisateur d'actionner ladite commande de déverrouillage (5).

8. Barre selon la revendication 2 ou l'une quelconque des revendications 3 à 7 lorsqu'elle dépend directement ou indirectement de la revendication 2, **caractérisée en ce qu'**une rotation de ladite partie mobile (33) selon un angle prédéterminé inférieur à 30° par rapport à la première configuration permet de découvrir entièrement ladite ouverture d'accès latérale (22) en correspondance de ladite première rainure (21).

9. Barre selon l'une quelconque des revendications précédentes, **caractérisée en ce que** lesdits moyens de verrouillage (4) et ladite commande de déverrouillage (5) sont logés dans ladite section de profilé.

10. Barre selon l'une quelconque des revendications précédentes, **caractérisée en ce que** la section de profilé (2) est un profil aérodynamique.
